(19) Europäisches Patentamt
European Patent Office
Office européen des brevets

(11) Numéro de publication: 0 040 151
B1

(12) FASCICULE DE BREVET EUROPEEN

(45) Date de publication du fascicule du brevet: 31.10.84

(51) Int. Cl.³: C 08 G 18/67, C 08 F 299/06

(21) Numéro de dépôt: 81400741.5

(22) Date de dépôt: 11.05.81

# (54) Procédé de préparation de résines polyuréthannes réticulées.

(30) Priorité: 14.05.80 FR 8010807

(43) Date de publication de la demande: 18.11.81 Bulletin 81/46

(45) Mention de la délivrance du brevet: 31.10.84 Bulletin 84/44

(84) Etats contractants désignés: BE CH DE FR GB IT LI NL

(56) Documents cités:
FR-A-1 366 079
FR-A-1 418 816

CHEMICAL ABSTRACTS, vol. 72, no. 20, 18-05-1970, page 5, ref. 101171y, Columbus, Ohio, US, K.M. ALEEV et al.: "Synthesis of polyurethanes with unsaturated side chains"

(73) Titulaire: SOCIETE NATIONALE DES POUDRES ET EXPLOSIFS
12, quai Henri IV
F-75181 Paris Cedex 04 (FR)

(72) Inventeur: Le Roy, Patrice
3, Avenue Foch
F-91760 Itteville (FR)
Inventeur: Pattein, Jacky Chemin Vicinal No.4
Le Mesnil Racoin Commune de Villeneuve-sur-Auvers
F-91680 Etréchy (FR)

EP 0 040 151 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention se rapporte à de nouvelles résines polyuréthannes réticules obtenues par réticulation de résines polyurethanes thermoplastiques comportant des groupes éthyléniques pendants.

L'invention se rapporte également auxdits matériaux chargés avec des fibres.

On connaît les résines polyuréthannes, linéaires ou non, comportant des groupements terminaux éthyléniques tels que les groupements acryliques ou méthacryliques. Ces résines sont obtenues par exemple à partir d'un prépolymère à terminaisons isocyanates et d'esters à terminaison hydroxyle de l'acide acrylique ou méthacrylique, comme l'hydroxy-2 acrylate d'éthyle.

De nombreux documents, dont on peut citer FR 2 136 779 et US 3 509 234, décrivent cette famille de produits.

Le nombre de fonctions éthyléniques réticulables de ce type de produit est cependant limité du fait qu'il est directement fonction du nombre de terminaisons du prépolymère. En outre, il est difficile d'obtenir un réseau tridimensionnel à moins d'utiliser des prépolymères non linéaires, ou un réticulant polyfonctionnel.

Il est également connu, par le brevet FR 1 418 816, des matières résineuses comportant des groupements acryliques ou méthacryliques pendants et qui sont obtenues par la réaction de diisocyanates, de diols, de composés polyhydroxy et d'un ester acrylique ou méthacrylique d'un alcool polyhydrique comme par exemple le monoacrylate de glycérol.

Ces résines polyuréthannes sont notamment utiles comme revêtements mais ne sont absolument pas thermoplastiques, ce qui réduit considérablement les possibilités de mise en oeuvre et donc les possibilités d'utilisation.

L'objet de l'invention se rapporte à une nouvelle famille de résines polyuréthannes thermoplastiques qui peuvent être réticulées grâce à leur insaturation pendante pour former un réseau tridimensionnel.

Ces résines allient donc aux avantages de pouvoir être réticulées ultérieurement en un réseau tridimensionnel (tenue en température, propriétés mécaniques, résistance aux agressions chimiques et stabilité dimensionnelle), les possibilités de mise en oeuvre des matières thermoplastiques.

Selon l'inevention, on prépare d'abord une résine polyuréthanne thermoplastique comportant des groupements éthyléniques pendants par réaction de:

(a) un diisocyanate organique,

(b) un diol linéaire saturé à longue chaîne de poids moléculaire compris entre 450 et 4000 et de préférence entre 500 et 2500,

(c) un composé aliphatique, cycloaliphatique ou aromatique dont le poids moléculaire est inférieur à 300, comprenant de 2 à 20 atomes de carbone, et possédant deux groupements ayant au moins un atome d'hydrogène actif vis-à-vis des fonctions NCO, et

(d) un diol insaturé, formé par l'ester acrylique ou méthacrylique d'un alcool trihydrique de formule:

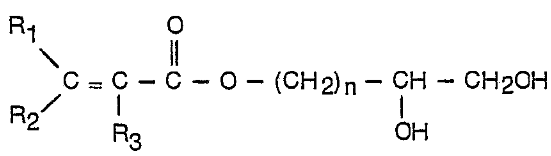

dans laquelle $R_1 = R_2$ ou $R_1 \neq R_2$ sont un atome d'hydrogène, un groupe aryle, un atome d'halogène,

$R_3$ est un atome d'hydrogène, un groupe méthyle, aryle ou cycloalkyle, un atome d'halogène,

n est un nombre entier compris entre 1 et 4,

le composé diisocyanate (a) étant présent dans un rapport NCO: groupement ayant au moins un H actif vis à vis des groupes NCO, inférieur ou égal à 1,1,

le rapport molaire diol b: composés (c) + (d) étant compris entre 0 et 10, et

le rapport molaire composé (c): diol insaturé (d) étant compris entre 0 et 10 si $b \neq 0$ et entre 1 et 10 si $b = 0$;

cette résine est ensuite réticulée par ouverture et polymérisation des groupes éthyléniques pendants.

Dans la description qui va suivre on désignera par le terme "pendant" les groupements éthyléniques n'ayant pas réagi et qui sont présents semblablement à des branchements tout au long du squelette linéaire de la molécule de polyuréthannes.

Par groupements acryliques on entendra de manière générique toutes les doubles liaisons éthyléniques, substituées ou non, conjuguées avec un groupement carbonyle.

Les diisocyanates qui peuvent être utilisés dans le cadre de l'invention sont bien connus et on peut utiliser avantageusement tous les composés qui contiennent deux groupes NCO libres. Parmi ces composés on mentionne les diisocyanates aliphatiques, cycloaliphatiques et aromatiques de poids moléculaire inférieur à 300 comme par exemple:

— les diisocyanates de 1,3- et 1,4-xylylène
— les diisocyanates de 2,4- et 2,6-tolylène (TDI)
— le diisocyanate de 4,4'-diphénylméthane diisocyanate (MDI)
— le diisocyanate de 1,5-naphtylène
— les diisocyanates de 1,4- et 1,6-hexaméthylène
— le diisocyanate de 1,4-tétraméthylène
— le 4,4'-méthylène bis (cyclohexylisocyanate) (par exemple le produit commercialisé par la Société DUPONT DE NEMOURS sous le nom d'HYLENE W).
— le 4,4-isopropyl bis (cyclohexylisocyanate)
— le diisocyanate de 1,4-cyclohexyle
— le 3-isocyanatométhyl-3,5,5 triméthyl cyclohexyl isocyanate (Isophorone diisocyanate: IPDI).

Toutefois, compte tenu de la réactivité beaucoup plus forte des isocyanates aromatiques, il est préférable d'utiliser, dans ce cas, des diols moins réactifs de manière à ne pas dépasser la température critique amenant la réticulation.

Habituellement, les diisocyanates aromatiques sont utilisés dans des applications qui ne nécessitent pas un haut degré de stabilité à la lumière. Ainsi, on utilisera de préférence les isocyanates aliphatiques ou cycloaliphatiques pour les applications nécessitant de bonnes qualités optiques (transparence, absence de coloration), une bonne tenue aux intempéries (tenue au UV) et de bonnes propriétés à basse température: dans ce cas on utilisera avantageusement le 4,4'-méthylène bis (cyclohexylisocyanate).

Par diols longs saturés on entend des macrodiols de poids moléculaire compris entre 450 et 4000, de préférence entre 500 et 2500, qui peuvent être constitués de groupements polyester, polyéther, polytétrahydrofuranne, polycaprolactone, polycarbonate selon l'importance accordée aux caractéristiques spécifiques bien connues apportées par chacun de ces motifs.

Ainsi il est bien connu que si l'on veut obtenir des résines polyuréthannes résistant à l'hydrolyse et ayant de bonnes propriétés à basse température il est avantageux d'utiliser des polyéthers, les polyesters par contre apporteront des améliorations au niveau des propriétés mécaniques. Les polycarbonates sont très avantageux du fait de leur excellentes propriétés mécaniques, leur resistance à l'hydrolyse et leurs propriétés adhésives.

Parmi les polyesters on peut citer le polyadipate d'éthylène glycol, de propylène glycol et en général les polyesters préparés à partir d'un diacide saturé ou de son anhydride et d'un diol saturé tel que ceux qui ont été cités précédemment. Comme sous classe des polyesters on peut citer les polycaprolactones.

On peut également citer les polyétheresters tels que d'adipate de polydiéthylène glycol dans lesquels le polyéther remplace une portion du glycol.

Comme polycarbonates de diols on peut citer les polycarbonates de butane diol ou d'hexanediol.

Parmi les polyéthers, on peut citer les polyéthers d'éthylène glycol, de propylène glycol ou encore le polytétrahydrofuranne.

Les composés (c) et (d), possédant de manière générale deux groupements ayant au moins un atome d'hydrogène actif vis à vis des groupes NCO, jouent le rôle d'extenseur de chaîne et permettent ainsi d'adapter les propriétés de résines.

Le nombre de groupements éthyléniques pendants sera d'autant plus important que le rapport (c): (d) sera faible.

Parmi les composés (c) possédant deux groupements ayant au moins un atome d'hydrogène actif vis à vis des groupes NCO on utilisera avantageusement des diols.

Parmi ces diols on peut citer les diols saturés tels que l'éthylèneglycol, le 1,3 propanediol, le 1,4 butanediol, le diéthylèneglycol, le 1,6-hexanediol, le 1,8-octanediol, le 1,10-décanediol, le triméthyl 2,2,4-hexanediol, le 1,2-cyclohexanediol et le 1,3-cyclohexanediol.

Les diols à insaturation éthylénique interne tels que le 2-butène-1,4-diol peuvent être utilisés seuls ou en mélange avec les diols saturés.

On utilise de préférence le 1,4 butanediol, le 1,3-butanediol, le 1,6-hexanediol ou le cyclohexane diméthanol.

Dans certains cas il peut être intéressant de remplacer en tout ou en partie le diol par un composé capable de former des liaisons urées dans le polymère. Il s'agit notamment, de diamine primaire ou secondaire aliphatique, cycloaliphatique ou aromatique. On peut citer: la 1,2 éthanediamine, la 1,3-butanediamine, la 1,5-pentanediamine, la 1,8-octanediamine, la 1,2-propanediamine, la 1,4-butanediamine et la 1,6-hexanediamine.

On utilise de préférence la 1,4-butanediamine ou la 1,6-hexanediamine.

On pourra également utiliser des diamines aromatiques comme le p,p'-diaminodiphénylméthane.

Il est également possible d'utiliser des alcanolamines comme l'éthanenolamine ou le méta-aminophénol.

Comme cela a été dit ci-dessus on préférera, quand on veut obtenir un produit stable à la lumière, les composés aliphatiques ou cycloaliphatiques.

Dans la description qui va suivre on se réfèrera uniquement aux diols, qui sont les composés (c) de

préférence utilisés dans la présente invention. Ainsi, dans ce cas particulier, le composé (c) correspond à un diol tel que cela est décrit ci-dessus.

Parmi les diols insaturés (d) à insaturation acrylique ou méthacrylique, il est particulièrement intéressant d'employer un diol formé par l'ester acrylique ou méthacrylique d'un alcool trihydrique de formule:

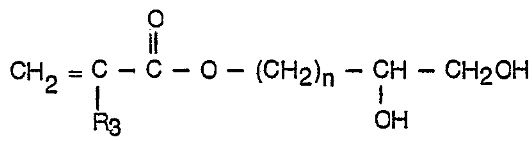

dans laquelle $R_3$ et n ont la même signification que précédemment.

Ces produits sont décrits, notamment, dans le Brevet FR 1 211 430.

En effet, bien qu'il ne soit pas exclu selon l'invention d'utiliser des diols insaturés dont le carbone éthylénique terminal soit substitué (voir formule générale), la réactivité de ces derniers est nettement plus faible.

On accordera la préférence à l'acrylate de dihydroxy-2,3 propyle. Un procédé particulièrement intéressant pour obtenir ce produit a été décrit dans le brevet français n° 2 391 988 de la société déposante.

Dans la description qui suit on utilisera le terme "diol court" pour désigner la somme des quantités molaires des composés (c) et (d). En effet, comme cela a été dit plus haut, le composé (c) correspond à un diol dans le mode préféré de l'invention.

Le poids moléculaire du diol long ainsi que le rapport molaire entre le diol long et le diol court dépendent de l'application envisagée et en particulier de la rigidité désirée. Ainsi, ce rapport pourra varier entre 0 et 10 selon le poids moléculaire du diol long et la rigidité désirée. Quand le diol long est présent, ce rapport sera de préférence supérieur à 0,16.

Le rapport molaire entre le composé (c) et le diol insaturé (d) peut varier de 0 à 10 selon le nombre moyen d'insaturations que l'on désire fixer par molécule et donc selon les propriétés finales recherchées.

Il est bien connu de l'homme de métier d'adapter les rapports diol court: diol long et (c): (d) de manière à obtenir les propriétés désirées.

Ainsi, si le diol long a un poids moléculaire inférieur à 800 il sera préférable d'avoir un rapport diol long: diol court compris entre 0,25 et 10 et un rapport (c) : (d) compris entre 0 et 1.

Par contre si le diol a un poids moléculaire supérieur à 800 on pourra avoir un rapport diol long : diol court compris entre 0,16 et 1 et un rapport (c) : (d) compris entre 0 et 2.

Dans certains cas, si on veut des produits très rigides on pourra ne pas utiliser de diol long (b) et le rapport (c) : (d) sera compris entre 1 et 10. Cette voie est toutefois moins interéssante du fait que lors de la formation de la résine la concentration en uréthanne est telle que le dégagement de chaleur est beaucoup plus important. Les risques de réticulation sont beaucoup plus importants ce qui entraine la perte de thermoplasticité du produit.

On a souvent intérêt à avoir un polymère parfaitement linéaire et soluble; pour cela le taux NCO/OH doit être voisin de 1. Il est en général compris entre 0,95 et 1,1, ce qui permet d'obtenir des polyuréthannes de poids moléculaire compris entre 15 000 et 100 000 dont les points de fusion peuvent être réglés de 70 à 140°C.

Pour faciliter les conditions de mise en oeuvre du produit (abaisser sa température de transformation et diminuer sa viscosité), il peut s'avérer également intéressant d'utiliser un rapport NCO/OH plus faible (inférieur à 0,95) afin de limiter le poids moléculaire. Il est ainsi possible de préparer des polyuréthannes de poids moléculaire inférieur à 15 000 dont la température de ramollissement est inférieure à 70°C. Etant donné que le produit sera ultérieurement réticulé, cela ne modifie pas les propriétés du matériau fini. Dans certains cas ce procédé permet d'obtenir des matériaux plus résistants.

Il est également possible, pour faciliter les conditions de mise en oeuvre, d'ajouter à la résine polyuréthanne selon l'invention, des monomères possédant une insaturation capable de réagir avec les liaisons acryliques de la résine. Les monomères jouent ainsi le rôle de système diluant réactif.

Comme monomères insaturés on peut citer:

—Les monomères vinyliques (acétate de vinyle, N-vinyl pyrrolidone, styrène).

—Les monomères acryliques ou méthacryliques (acrylate d'alkyle, acrylate phenoxyéthyl, diacrylate d'hexanediol, éthoxyéthylacrylate, triméthylolpropane triacrylate et les équivalents méthacrylates des composés cités ci-avant).

Toutefois, les monomères méthacryliques sont moins intéressants que les acryliques en raison de leur réactivité plus faible.

La viscosité de la composition ainsi formée sera fonction de la proportion de monomères présents. Généralement on utilisera un rapport résine polyuréthanne/monomère compris entre 95/5 et

40/60 mais de préférence entre 90/10 et 70/30.

Ce mélange permet d'abaisser le point de ramollissement et la viscosité de la résine, ce qui autorise d'une part des températures de mise en oeuvre plus basses, d'autre part des taux de charge plus élevés. Un autre avantage de cette variante est d'ajuster la densité du réseau tridimensionnel et donc d'adapter les propriétés du matériau aux applications envisagées.

Naturellement, il est possible de combiner ce deux variantes (solvant et NCO : OH $< 0,95$), par exemple si l'on veut travailler à des températures très modérées avec des systèmes très fluides ou si l'on veut charger fortement la résine.

Les résines polyuréthannes de la première étape peuvent être préparées en masse ou en solvant par le procédé dit "au prépolymère" ou par le procédé dit "en une seule fois".

Ces deux procédés sont bien connus de l'homme de métier pour qu'il ne soit pas nécessaire d'en faire une description détaillée.

En bref, dans le procédé "au prépolymère" une partie des diols est mis en réaction avec un excès de diisocyanate (2 à 3 fois la quantité stoechiométrique pour former le prépolymère). Les fonctions isocyanates libres de ce dernier réagissent ensuite avec le complément des diols pour former le polyuréthanne.

Dans le procédé "en une seule fois" l'ensemble des réactifs (polyol et isocyanate) est mélangé en une seule étape.

Ces deux procédés peuvent être mis en oeuvre en masse ou en solvant.

La vitesse de réaction entre l'isocyanate et les polyols peut être augmentée soit par des catalyseurs aminés ou métalliques bien connus de l'homme de métier, soit par une augmentation de température. On peut opérer à des températures comprises entre 40 et 110°C; toutefois, on préférera travailler à des température inférieures à 70°C. Lorsque l'on veut que la réaction se fasse à température plus élevée, il peut être intéressant d'ajouter une petite quantité d'un inhibiteur on peut utiliser à titre d'exemple de l'hydroquinone ou de la phénothiazine à des quantités comprises entre 0 et 5000 ppm.

La deuxième étape du procédé conduit, à partir des résines polyuréthannes thermoplastiques intermédiaires à réseau tridimensionnel par ouverture et polymérisation des groupements éthyléniques pendants.

La réticulation du polyuréthanne insaturé ou mélange de ce polyuréthanne avec un monomère peut se faire selon tous les procédés bien connus de polymérisation radicalaire:

—polymérisation thermique ou par haute fréquence, en présence ou non de promoteurs radicalaires (peroxydes, hydroperoxydes ou promoteur de type azo) aux températures usuelles de polymérisation, de préférence cependant entre 50 et 220°C. A titre d'exemples, on peut citer le peroxyde de dicumyle, le peroxyde de tertiobutyle, le peroxyde de benzoyle, le peroxyde de lauroyle, l'hydroperoxyde de cumène le percarbonate de dicyclohexyle et l'azo-bis-isobutyronitrile,

—polymérisation à température ambiante sous rayonnement ultra violet, en présence de photoinitiateurs ou de photo-sensiblateurs dans les conditions usuelles. A titre d'exemples on peut citer comme photonitiateurs : les ethers de la benzoïne et les dérivés phénoniques seuls ou en association avec une amine (benzophénone, diéthoxyacétophénone, Irgacure 651 de CIBA, Carocur 1116 de MERCK).

Ce type de polymérisation est cependant limité aux applications pour lesquelles, d'une part les produits sont peu ou pas chargés et d'autre part aux épaisseurs faibles (inférieures à 1 mm et de préférence inférieure à 100 mm).

Ce mode de réticulation convient particulièrement bien au vernis ou lorsque l'on désire durcir uniquement la surface du matériau pour en augmenter la résistance à l'abrasion tout en conservant à coeur un matériau thermo-plastique; de cette façon on conserve une excellente résistance au choc alliée à une bonne résistance superficielle à la rayure.

Il est préférable d'employer un promoteur radicalaire. Cela permet de régler la température de la cuisson.

Il est avantageux entre autre de l'introduire lors de la formation du polyuréthanne thermoplastique, en ayant soin bien entendu d'utiliser un promoteur ayant une demie vie assez longue, cette variante permet d'obtenirdes produits finaux ayant de meilleures propriétés mécaniques.

La réticulation par polymérisation sous rayonnement $\beta$ ou $\gamma$ de durcir, à coeur et sans chauffer, des matériaux chargés ou non. L'intérêt est évident lorsque l'on veut fabriquer selon un procédé permettant des cadences élevées (extrusion, injection) des matériaux à bonnes performances mécaniques contenant des thermosensibles.

Toutefois, bien que l'intérêt soit moindre (sauf pour certaines applications particulières comme la fabrication de préimprégnés), il est possible de séparer nettement la phase de mise en oeuvre et la phase de réticulation.

De même, il est possible de réaliser les deux phases ci-dessus simultanément, par exemple, lorsque la mise en oeuvre se fait par coulée; dans ce cas la réaction de polycondensation conduisant à la formation du polyuréthanne est effectuée simultanément avec la réaction de polymérisation radicalaire des groupements acryliques.

Naturellement, dans la pratique, il est intéressant que les deux phases soient réalisées l'une après

l'autre, en continu, pour conserver l'avantage de la mise en oeuvre des thermoplastiques.

Les matériaux ainsi obtenus peuvent recevoir de nombreuses applications étant donné la souplesse de mise en oeuvre comme cela vient d'être décrit.

Les produits préparés selon l'invention conduisent après injection ou extrusion puis réticulation à des plaques ou des profilés (et trouvent des applications dans le domaine des matériaux transparents), des gaines, des joints souples ou semi-rigides et de la câblerie.

Il est également possible d'utiliser ces produits en associations avec des charges minérales ou organiques afin d'obtenir des matériaux composites. Il est avantageux dans cette application d'utiliser des résines de faible viscosité.

Ainsi, les polyuréthannes préparés selon l'invention peuvent être chargés par des fibres courtes de type verre ou carbone et conduire après injection puis réticulation à des pièces mécaniques particulièrement résistantes pouvant être utilisées par exemple dans l'industrie automobile.

Une autre application particulièrement intéressante concerne la pultrusion de fibres continues (verre, carbone, silice ou kevlar) pour préparer des profilés à haute performance utilisables comme pièces techniques dans de nombreux domaines comme les sports, l'aéronautique et les machines. L'absence de risque de réticulation prématurée dans les filières de pultrusion présente un énorme avantage par rapport aux résines thermodurcissables (époxy ou polyester) habituellement utilisées dans cette technique.

Une variante particulièrement intéressante de cette application concerne la fabrication de préimprégnés. Par rapport aux systèmes traditionnels de fabrications de préimprégnés faisant appel à des résines époxy ou polyester, les résines selon l'invention permettent d'une part, de préparer des préimprégnés ne nécessitant pas de conditions de stockage à basse température en raison de leur excellente stabilité à température ambiante et d'autre part, de simplifier le procédé de mise en oeuvre.

Ces techniques permettent également de préparer selon des procédés autorisant des cadences très élevées (extrusion, injection) des matériaux chargés de produits actifs thermosensibles; il est ainsi possible de fabriquer des poudres, des propergols ou des explosifs.

Les exemples ci-dessous illustrent l'invention.

Les polyuréthannes selon l'invention ont été préparés en utilisant comme diol insaturé l'acrylate de dihydroxy-2,3 propyle, dont les caractéristiques sont les suivantes:

| | |
|---|---|
| — poids moléculaire : | 164 |
| — taux OH: | 12,2 eq/Kg |
| — taux insaturation : | 6,80 eq/Kg |

Exemple 1

Un polyuréthanne a été préparé par le procédé "en une seule fois", en solvant. Les proportions des différents composés utilisés sont indiqués dans le tableau ci-dessous.

| MATIERES PREMIERES | CARACTERISTIQUES MATIERES PREMIERES | COMPOSITION MOLAIRE | COMPOSITION PONDERALE g/100 g | PARAMETRE FORMULATION |
|---|---|---|---|---|
| Polyester-diol Hooker | 3,8 OH/Kg | 1 mole | 56 g | NCO/OH = 1 |
| S 1063—210 | | | | $\frac{\text{Diol long}}{\text{Diol court}}$ 0,25 |
| Butane Diol 1,4 (c) | 21,8 OH/Kg M = 92 | 2 moles | 19 g | |
| Diol insaturé (d) | 12,2 OH/Kg M = *164* insatur. = 7eq/Kg | 2 moles | 35 g | $\frac{\text{Diol (c)}}{\text{Diol (d)}} = 1$ |
| Hylène W | 7,6 NCO/Kg | 5 moles | 140 g | |
| Solvant CH $Cl_3$ | | | 750 g | |
| Catalyseur DBDL | | 0,5 P/polyols | 0,6 g | |

La polyaddition est effectuée dans les conditions suivantes:

—réacteur de verre de 2 litres
—piods du mélange réactionnel : 2000 g
—température 40 ± 1 °C
—agitation permanente sous azote
—durée 24 heures

La cinétique est suivie par dosage de l'isocyanate libre. La récupération du polymère s'éffectue de la façon suivante:

—la solution est diluée (×2 en poids de chloroforme)
—la précipitation a lieu dans la ligroïne (coupe 40—60°C)
—le séchage a lieu sous vide à température ambiante.

Caractéristiques du polymère obtenu

Le produit obtenu présente les caractéristiques suivantes:

—solubilité totale dans le 1,2 dichloréthane
—poids moléculaire 20000 (GPC)
—température de transition vitreuse 25°C
—température de ramollissement 80°C

Conditions de réticulation — Caractéristiques du produit obtenu

Ce produit a pu être réticulé sous presse, à l'aide d'un moule à poinçon, en présence de promoteur radicalaire, selon les conditions suivantes:

—température des plateaux 120°C
—peroxyde benzoyle (promoteur radicalaire) : 2% en poids
—durée: 15 min

Après démoulage, le produit présente les caractéristiques suivantes:

—insolubilité totale dans les solvants usuels
—infusible
—dureté : 32 à 35 points BARCOLL
—caractéristiques en traction:
  · allongement à la rupture 8%
  · module à l'origine : 5 200 daN/cm2
  · contrainte à la rupture : 325 Kg/cm2.

Exemple 2

Un polyuréthanne ayant la même composition que dans l'exemple 1 est préparé en masse selon le procédé "en une seule fois".

On utilise un mélangeur rapide, à pales en Z. Les produits mélangés à 50°C durant 30 min sous azote, puis coulés dans un moule. La cuisson en étuve ventilée dure 24 heures à 60°C. On obtient, par opération 600 à 700 g de polyuréthanne.

Caractéristiques du produit obtenu

On obtient un produit dur, et soluble.

Conditions de réticulation sans promoteur radicalaire

Caractéristiques du produit obtenu

Ce produit à été moulé sous presse dans les conditions suivantes:

—température de fusion : 160°C
—température de réticulation : 200°C
—durée de réticulation : 10 à 60 min

On obtient un produit transparent, de dureté 80—85 shore D, insoluble dans tous les solvants usuels (1,2 dichloréthane, chloroforme, tétrahydrofuranne).

Exemple 3

Un polyuréthane dont la composition ne contient pas de diol long est préparé en masse selon le procédé "en une seule fois". Le mode opératoire est identique à celui adopté dans l'exemple 2.

Composition

| MATIERES PREMIERES | CARACTERISTIQUES | COMPOSITION MOLAIRE | COMPOSITION PONDERALE | PARAMETRES FORMULATION |
|---|---|---|---|---|
| Butane diol 1,4 (c) | 21,08 OH/kg M = 92 | 1 mole | 12% | NCO/OH = 1 |
| Diol insaturé (d) | 12,2 OH/kg M = 164 | 1 mole | 21% | |
| Hylène W | 7,6 NCO/kg | 2 moles | 67% | $\frac{\text{diol (c)}}{\text{diol (d)}} = 1$ |

Caractéristiques du polymère obtenu

On obtient un produit qui présente les caractéristiques suivantes:

—soluble dans le tétrahydrofuranne

—poids moléculaire 12 000

—température de ramollissement 80°C

Malaxage du produit en cuve BRABENDER

Le produit a été introduit dans une cuve BRABENDER pour thermoplastique à 90°C. On obtient les résultats suivants:

—après 5 min de malaxage à 20 t/min, la masse plastique autour des cames de malaxage est transparente. Le couple enregistré est alors de 2 000 g × m.

—on observe une augmentation brutale du couple après 15 min de malaxage : le produit obtenu est une poudre très dure et insoluble dans tous les solvants usuels

—l'addition de 1% d'hydroquinone, au début du malaxage, a permis de maintenir le comportement thermoplastique du produit pendant au moins 20 min.

Exemple 4

Un polyuréthanne de faible viscosité a été synthétisé de la manière suivante:

| MATIERES PREMIERES | CARACTERISTIQUES MATIERES PREMIERES | COMPOSITION MOLAIRE | COMPOSITION PONDERALE g/1000 g | PARAMETRE FORMULATION |
|---|---|---|---|---|
| Polyester diol Hooker S 1063—210 | 3,81 OH/kg M 525 | 1 mole | 56 g | NCO/OH = 0,9 |
| Butane diol 1,4 (c) | 21,08 OH/kg M = 92 | 2 moles | 19 g | $\frac{\text{diol long}}{\text{diol court}} = 0,25$ |
| diol insaturé (d) | 12,2 OH/kg M = 164 taux insat. = 7 eq/kg | 2 moles | 35 g | $\frac{\text{diol (c)}}{\text{diol (d)}} = 1$ |
| Hylène W | 7,6 NCO/kg | 4,5 moles | 140 g | |

Conditions de fabrication

1. Incorporation du diol insaturé + polyester à T = 60°C
   Vide dynamique durant 1 heure
2. Incorporation de butane diol 1,4
   Mélangeage sous azote sec durant 1/4 heure
3. Introduction de l'hylène W à T = 60°C
   Mélangeage sous azote sec pendant 30 min
4. Coulée, filtration
5. Cuisson à 50°C en boîte étanche à l'humidité durant 48 heures

Caractéristiques du polymère

—solubilité dans les solvants usuels des polyuréthannes
—poids moléculaire : 8 000
—température de transition vitreuse : 7°C
—taux d'insaturation conjuguée : 0,76 eq/Kg
—température de ramollissement : 70°C

Conditions de réticulation — Caractéristiques du produit obtenu

Le produit a été moulé sous presse dans les conditions suivantes:
—température de réticulation : 200°C
—durée de réticulation : 60 min

On obtient des produits transparents; les caractéristiques sont les suivantes:
—insoluble dans les solvants usuels
—85 à 90 shore D en dureté

Exemple 5

Préparation d'un polyuréthanne à partir d'un diisocyanate aromatique. Les conditions de fabrications sont les suivantes:

1. Incorporation du diol insaturé + polyester à T = 40°C
   Vide dynamique durant 1 heure
2. Incorporation du butane diol-1,4
   Mélangeage durant 20 min sous barbotage d'air
   Introduction du TDI à T = 40°C
   Mélangeage sous courant d'air durant 5 min
4. Coulée en épaisseur de 10 min
5. Cuisson pendant 24 heures à 60°C

| MATIERES PREMIERES | CARACTERISTIQUES MATIERES PREMIERES | COMPOSITION MOLAIRE | COMPOSITION PONDERALE g/1000 g | PARAMETRE FORMULATION |
|---|---|---|---|---|
| Polyester diol Hooker S 1063—55 | 1 OH/kg M 2000 | 1 mole | 600 g | NCO/OH = 0,95<br>$\frac{\text{diol long}}{\text{diol court}} = 0,25$ |
| Butane diol 1,4 (c) | 21,8 OH/kg M = 92 | 2 moles | 55 g | |
| diol insaturé (d) | 12,2 OH/kg M = 164<br>taux insat. = 7 eq/kg | 2 moles | 98 g | $\frac{\text{diol (c)}}{\text{diol (d)}} = 1$ |
| TDI pur | M = 174 11,2 NCO/kg | 4,75 moles | 247 g | |

Caractéristiques du polymère
—solubilité dans les solvants (présence de microgels dans le 1,2 dichloroéthane)
—température de ramollissement 85°C

Réticulation en présence de péroxyde de dicumyle
Le produit a été moulé sous presse à 200°C durant 5 min. On obtient un produit insoluble.

Exemple 6
Le produit préparé selon l'exemple 1 est extrudé dans les conditions suivantes:

Matériel utilisé
Extrusiographe BRABENDER:
—Vis (diamètre: 19 mm)
—$\frac{L}{D} = 25$
—Taux de compression: 3/1
—Filière 1 = 25 mm; e = 0,6 mm

Les mesures de températures effectuées tout au long du fourreau sont réunies dans le tableau ci-dessous:

| | Entrée | 1/3 | 2/3 | Sortie |
|---|---|---|---|---|
| T affichée en °C | 90 | 85 | 85 | 90 |
| T matière en °C | | 98 | 96 | 93 |

—pression matière : 400 à 500 bars
—contre-pression : 350 bars
—couple : 9 000 à 10 000 gxm
—vitesse : 45 t/min

Ces essais ont montré que le produit était extrudable et restait après extrusion transparent et thermoplastique.

Résultats
Une bande transparente a été obtenue. L'extrudable obtenu a les propriétés suivantes:
—solubilité dans le chloroforme
—soumis 1 heure à 150°C, cet extrudat transparent devient insoluble dans le chloroforme.

Exemple 7
Le produit préparé selon l'exemple 2 est moulé sous presse.

Moule utilisé
Moule acier permettant la réalisation de plaques d'épaisseur 2 mn et de surface 35 × 60 mm$^2$.

Conditions de moulage
Le polyuréthanne a été moulé sous presse, dans les conditions suivantes:
1. Séchage du produit en poudre, sous vide dynamique, pendant 24 heures, à 30°C.
2. Mise en chauffe du moule à la température $T_f$ (température de fusion de la matière)
3. Incorporation du polyuréthanne; fermeture du moule
4. Maintien en température sans pression durant $t_f$ (temps de fusion matière).
5. Mise sous faible pression (pression de moulage) avec augmentation progressive de la température jusqu'à $T_r$, (température de réticulation).
6. A $T_r$, mise sous pression de réticulation durant $t_r$ (temps de réticulation)
7. Maintien de la pression; refroidissement rapide
8. Démoulage.

Le tableau ci-après permet de situer les conditions de moulage ayant permis d'obtenir des plaques de polyuréthanne transparente et réticulées, sans additif.

TABLEAU 1
Conditions de moulage

| Référence moulage | 4 | 5 | 6 | 7 | 8 |
|---|---|---|---|---|---|
| $T_f$-température du moule (°C) | 160 | 160 | 160 | 160 | 160 |
| $t_f$-temps de fusion (min) | 10 | 10 | 10 | 10 | 10 |
| Pression de moulage (bars) | 10 | 10 | 10 | 10 | 8 |
| $T_r$-température de réticulation (°C) | 200 | 200 | 200 | 200 | 200 |
| $t_r$-temps réticulation (min) | 10 | 60 | 60 | 60 | 10 |
| Mesures effectuées sur les plaques dureté (shore D) | 80 | 85 | 80 | 80 | 75 |
| gonflement (%) | 800 | 400 | 325 | 350 | 900 |

Caractéristiques des polyuréthannes obtenus

Sur les plaques transparentes obtenue par moulage, nous avons réalisé les mesures suivantes:
—solubilité (1,2 dichloroéthane, chloroforme)
—dureté Shore D
—gonflement dans le chlorure de méthylène
durée : 70 heures
température 20°C

Tous les produits sont insolubles après moulage, et les duretés obtenues sont de l'ordre de 75 à 85 Shore D (Voir tableau n°1). Les mesures de gonflement après 70 heures à 20°C montrent que la densité de réticulation croît avec l'augmentation du temps de cuisson (On observe une diminution de gonflement).

Exemple 8

Le produit préparé selon l'exemple 2 est moulé sous presse en présence de promoteur radicalaire (peroxyde de dicumyle).

Moule utilisé

Moule acier permettant la réalisation de plaques d'épaisseur 2 mm et de surface 100 × 80 $mm^2$.

Conditions de moulage

1. Le polyuréthanne et le péroxyde de dicumyle sont séchés, dégazés sous vide dynamique durant 48 H à 30°C.
2. Mise en chauffe du moule à la température $T_f$. (température de fusion de la matière).
3. Dépôt dans le moule, du mélange intime des constituants (polyuréthanne + peroxyde) — fermeture du moule.
4. Maintien en température durant $t_f$
5. Mise sous faible pression (pression du moulage) avec augmentation progressive de la température jusqu'à $T_r$ (température de réticulation)
6. A $T_r$, mise sous pression de réticulation durant $t_r$ (temps de réticulation)
7. Maintien de la pression, refroidissement rapide
8. Démoulage

Le tableau ci-dessous récapitule les conditions de moulage ayant permis d'obtenir des plaques de polyuréthanne.

| Pourcentage pondéral de péroxyde de dicumyle | 0,14% | 0,14% | 0,4% | 0,4% |
|---|---|---|---|---|
| Moulage | | | | |
| $T_f$ (température du moule °C) | 130 | 130 | 130 | 130 |
| $t_f$ (temps de ramollissement) min | 5 | 5 | 5 | 5 |
| Pression de moulage (bars) | 20 | 15 | 20 | 20 |
| $T_r$ (température de réticulation) °C | 200 | 200 | 200 | 200 |
| $t_2$ (temps de réticulation) min | 10 | 40 | 5 | 60 |
| Mesures effectuées sur les plaques | | | | |
| Dureté (points BARCOLL) | 20 à 30 | 20 à 30 | 20 à 30 | 25 à 30 |
| Gonflement (%) ($CH_2Cl_2$—20°C—70 h) | 98 | 108 | 110 | 130 |
| Flexion | | | | |
| E (hbar) | 200 | 200 | 200 | 200 |
| Contrainte à la rupture (bars) | 800 | 800 | 800 | 800 |
| Flèche à la rupture (min) | 7 | 7 | 7 | 7 |

Exemple 9

Le produit préparé selon l'exemple 2 à été injecté.

Matériel d'injection
—presse de type 150/60
—force de fermeture maximale : 60 tonnes
—volume maximal injecté : 90 $cm^3$
—plastification par vis (diamètre: 30 mm)

Réalisation de l'essai

Le moule utilisé permet de réaliser des plaques de 150 x 150 mm, d'épaisseur 2 mm.

Conditions:
—la matière est étuvée à 60°C pendant 4 heures, sous vide dynamique.
—température : 90 à 120°C
—pression d'injection (pression d'huile) : 95 bars
—température du moule : 180°C
—maintien dans le moule : 20 min

Résultats:

Cet essai nous a permis d'obtenir des plaques transparentes, de dureté 80 Shores D, insoluble dans les solvants usuels.

Exemple 10

Un polyuréthanne ayant la même composition que celui de l'exemple 2 est préparé en masse selon le procédé "en une seule fois" en introduisant le péroxyde de ditertiobutyle en même temps que les autres constituants. On obtient un produit dur et soluble dans les solvants usuels.

Le produit est ensuite extrudé dans les conditions suivantes:
—Vis (diamètre:19 mm)
—L/D = 25
—Taux de compression : 3/1
—Filière : 1 = 100 mm; e = 0,8 mm

Les mesures de températures effectuées tout au long du fourreau sont réunies dans le tableau ci-dessous.

| | Entrée | 1/3 | 2/3 | Sortie |
|---|---|---|---|---|
| T affichée en °C | 130 | 120 | 130 | 150 |

—contre-pression 50 bars
—couple 3500 g × m
—vitesse 75 t/min
— temps d'extrusion 1 heure

Exemple 11

Un polyuréthanne a été préparé en remplaçant le polyester diol de masse moléculaire 525 par un polyester diol de masse moléculaire 950.

| | Composition molaire | Paramètres formulations |
|---|---|---|
| Polyester diol S 1063—120 | 1 mole | NCO/OH = 1 |
| butanediol (c) | 2 moles | $\frac{\text{diol court}}{\text{diol long}} = 4$ |
| diol court insaturé (d) | 2 moles | |
| Hylène W | 5 moles | $\frac{\text{diol (c)}}{\text{diol (d)}} = 1$ |
| catalyseur de Peroxyde de Dicumyle par rapport au diol insaturé (d) | 3% | |

La température de transition vibreuse du polyuréthanne thermoplastique est de 3,2°C. Réticulation à 200°C comme précédemment.

Propriétés du produit réticulé:

—gonflement (%) $CH_2Cl_2$ 78

—dureté (points Barcoll) 15

—module flexion E 110

—rupture flexion 430

—flèche à la rupture 4,6

## Revendications

1. Procédé de fabrication de polyuréthannes réticulés caractérisé en ce que:

—Dans une première étape on réalise une résine polyuréthanne thermoplastique comportant des groupements éthyléniques pendants par réaction de:

(a) un diisocyanate organique,

(b) un diol linéaire saturé à longue chaîne de masse moléculaire comprise entre 450 et 4000, et de préférence entre 500 et 2500,

(c) un composé aliphatique, cycloaliphatique ou aromatique dont la masse moléculaire est inférieure à 300 et comprenant 2 à 20 atomes de carbone, et possédant deux groupements ayant au moins un atome d'hydrogène actif vis-à-vis des fonctions NCO et

(d) un diol insaturé de formule:

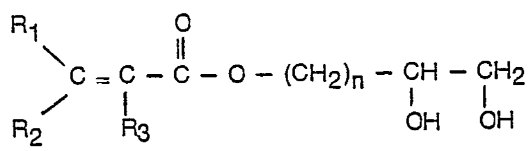

dans laquelle $R_1 = R_2$ ou $R_1 \neq R_2$ sont un atome d'hydrogène, un groupe aryle, un atome d'halogène, $R_3$ est un atome d'hydrogène, un groupe méthyle, aryle ou cycloalkyle, un atome d'halogène, n est un nombre entier compris entre 1 et 4,

le composé diisocyanate (a) étant présent dans un rapport NCO: groupement ayant au moins un H actif vis-à-vis des groupes NCO, inférieur ou égal à 1,1,

le rapport molaire diol (b) : composés (c) + (d) étant compris entre 0 et 10,

le rapport molaire composé (c) : diol insaturé (d) étant, quelle que soit la valeur de b, inférieur à 10 mais aussi supérieur à 1 si b = 0;

— Dans une deuxième étape, on réticule la résine polyuréthanne thermoplastique précitée par ouverture et polymérisation des groupements éthyléniques pendants.

2. Procédé selon la revendication 1, caractérisé en ce que le rapport molaire diol (b) : composés (c) + (d) est compris entre 0,16 et 10.

3. Procédé selon la revendication 1, caractérisé en ce que le composé (c) est choisi dans le groupe formé par les diols saturés ou insaturés ou un mélange de ces composés.

4. Procédé selon la revendication 1, caractérisé en ce que le diol insaturé (d) a la formule:

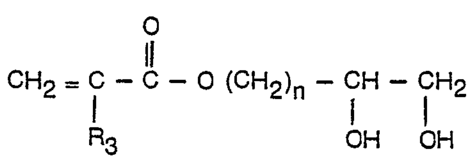

$R_3$ et n ayant la même signification.

5. Procédé selon la revendication 4, caractérisé en ce que le diol insaturé (d) est l'acrylate ou le méthacrylate de dihydroxy-2,3 propyle.

6. Procédé selon la revendication 1, caractérisé en ce que la résine polyuréthanne thermoplastique a une masse moléculaire comprise entre 15000 et 100000 et en ce que le rapport NCO : OH est compris entre 0,95 et 1,1, de préférence voisin de 1.

7. Procédé selon la revendication 1, caractérisé en ce que la résine polyuréthanne thermoplastique a une masse moléculaire inférieure à 15000 et une température de ramollissement inférieure à 70°C, et en ce que le rapport NCO:OH est inférieur à 0,95.

8. Procédé selon la revendication 1, caractérisé en ce qu'on associe à la résine polyuréthanne thermoplastique, avant sa réticulation, un système diluant réactif comprenant au moins un composé monomère insaturé polymérisable.

9. Procédé selon l'une quelconque des revendications 1 à 8, caractérisé en ce que la résine polyuréthanne thermoplastique, avant sa réticulation, imprègne une matière fibreuse.

10. Matériaux à base de polyuréthanne réticulé, caractérisés en ce que ledit polyuréthanne réticulé est obtenu selon l'une quelconque des revendications 1 à 8.

**Patentansprüche**

1. Verfahren zur Herstellung von vernetzten Polyurethanen, dadurch gekennzeichnet, daß man

—in einer ersten Stufe ein thermoplastisches Polyurethanharz mit ethylenischen Seitenketten herstellt durch Umsetzen von:

(a) einem organischen Diisocyanat,

(b) einem linearen, gesättigten, langkettigen Diol mit einer Molmasse zwischen 450 und 4000, vorzugsweise zwischen 500 und 2500,

(c) einer aliphatischen, cycloaliphatischen oder aromatischen Verbindung mit einer Molmasse unter 300 und 2 bis 20 Kohlenstoffatomen und zwei Gruppen enthaltend, die mindestens ein gegenüber den NCO-Gruppen aktives Wasserstoffatom haben, und

(d) einem ungesättigten Diol der Formel:

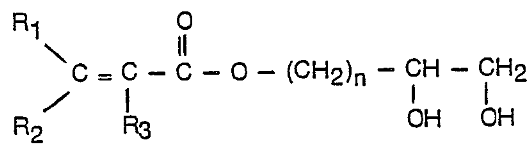

in der $R_1 = R_2$ oder $R_1 \neq R_2$ und ein Wasserstoffatom, eine Arylgruppe, ein Halogenatom sind,
$R_3$ ein Wasserstoffatom, eine Methyl-, Aryl- oder Cycloalkylgruppe, ein Halogenatom ist,
n eine ganze Zahl von 1 bis 4 ist,
wobei das Diisocyanat(a) in einem Verhältnis von NCO zur Gruppe mit mindestens einem gegenüber den NCO-Gruppen aktiven H von unter oder gleich 1,1 vorhanden ist,
das Molverhältnis von Diol (b) zu Verbindungen (c) + (d) zwischen 0 und 10 liegt.
das Molverhältnis von Verbindung (c) zu ungesättigtem Diol (d), unabhängig vom Wert von b, kleiner als 10 aber auch größer als 1 ist, wenn b = 0;
in einer zweiten Stufe das ausgefallene thermoplastische Polyurethanharz durch Offnung und Polymerisation der ethylenischen Seitenketten vernetzt.

2. Verfahren nach Anspruch 1, dadurch gekennzeichnet, daß das Molverhältnis von Diol (b) zu Verbindungen (c) + (d) zwischen 0,16 und 10 liegt.

3. Verfahren nach Anspruch 1, dadurch gekennzeichnet, daß die Verbindung (c) aus der aus gesättigten oder ungesättigten Diolen oder einem Gemisch dieser Verbindungen bestehenden Gruppe ausgewählt wird.

4. Verfahren nach Anspruch 1, dadurch gekennzeichnet, daß das ungesättigte Diol (d) die Formel hat:

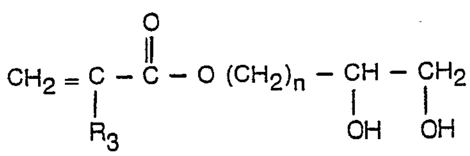

in der $R_3$ und n die gleiche Bedeutung haben.

5. Verfahren nach Anspruch 4, dadurch gekennzeichnet, daß das ungesättigt Diol (d) Dihydroxy-2,3-propylacrylat oder -methacrylat ist.

6. Verfahren nach Anspruch 1, dadurch gekennzeichnet, daß das thermoplastische Polyurethanharz eine Molmasse zwischen 15000 und 100000 hat und daß das Verhältnis von NCO zu OH zwischen 0,95 und 1,1, vorzugsweise um 1, liegt.

7. Verfahren nach Anspruch 1, dadurch gekennzeichnet, daß das thermoplastische Polyurethanharz eine Molmasse unter 15000 und eine Erweichungstemperatur unter 70°C hat und daß das Verhältnis von NCO zu OH unter 0,95 ist.

8. Verfahren nach Anspruch 1, dadurch gekennzeichnet, daß man dem thermoplastischen Polyurethanharz vor der Vernetzung ein reaktives Verdünnungssystem zugibt, das mindestens ein ungesättigtes polymerisierbares Monomeres enthält.

9. Verfahren nach einem der Ansprüche 1 bis 8, dadurch gekennzeichnet, daß man mit dem thermoplastischen Polyurethanharz vor der Vernetzung ein faseriges Material imprägniert.

10. Material auf der Basis von vernetztem Polyurethan, dadurch gekennzeichnet, daß das vernetzte Polyurethan nach einem der Ansprüche 1 bis 8 erhalten worden ist.

## Claims

1. Process for the manufacture of cross-linked polyurethanes characterised in that:
—in a first step a thermoplastic polyurethane resin containing ethylenic side groups is obtained by the reaction of:
(a) an organic diisocyanate;
(b) a long-chain saturated linear diol having a molecular weight of between 450 and 4000, and preferably between 500 and 2500;
(c) an aliphatic, cycloaliphatic or aromatic compound having a molecular weight of less than 300, containing 2 to 20 carbon atoms, and possessing two groups having at least one hydrogen atom which is active towards NCO groups; and
(d) an unsaturated diol of the formula:

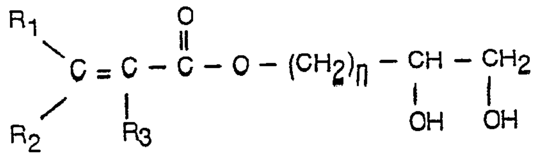

in which $R_1$ and $R_2$, which are identical or different, are a hydrogen or a halogen atom or an aryl group;

$R_3$ is a hydrogen or a halogen atom or a methyl, cycloalkyl or aryl group;

n is an integer between 1 and 4,

the diisocyanate compound (a) being present in a ratio NCO: group having at least one hydrogen atom which is active towards the NCO groups, which is less than or equal to 1.1,

the molar ratio diol (b):compounds (c) + (d) being between 0 and 10,

the molar ratio compound (c):unsaturated diol (d) being, whatever the value of (b), less than 10 but also greater than 1 if (b) = 0;

— in a second step, said thermoplastic polyurethane resin is cross-linked by opening and polymerization of the side ethylenic groups.

2. Process according to Claim 1, characterised in that the molar ratio diol (b):compounds (c) + (d) is between 0.16 and 10.

3. Process according to Claim 1, characterised in that compound (c) is chosen from the group formed by saturated or unsaturated diols or a mixture of these compounds.

4. Process according to Claim 1, characterised in that the unsaturated diol (d) has the formula:

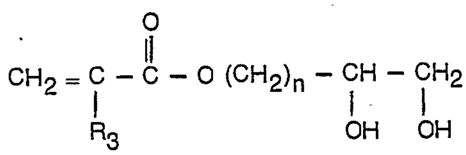

$R_3$ and n having the same meaning as in Claim 1.

5. Process according to Claim 4, characterised in that the unsaturated diol (d) is 2,3-dihydroxypropyl acrylate or methacrylate.

6. Process according to Claim 1, characterised in that the thermoplastic polyurethane resin has a molecular weight of between 15,000 and 100,000 and in that the ratio NCO:OH is between 0.95 and 1.1, preferably about 1.

7. Process according to Claim 1, characterised in that the thermoplastic polyurethane resin has a molecular weight less than 15,000, a softening temperature less than 70°C and in that the ratio NCO:OH is less than 0.95.

8. Process according to Claim 1, characterised in that the thermoplastic polyurethane resin is associated, before its cross-linking, with a reactive diluent system comprising at least one unsaturated polymerisable monomeric compound.

9. Process according to any one of Claims 1 to 8, characterised in that the thermoplastic polyurethane resin impregnates a fibrous material before being cross-linked.

10. Cross-linked polyurethane materials, characterised in that said cross-linked polyurethane is obtained according to any one of Claims 1 to 8.